# EUROPÄISCHE PATENTSCHRIFT

(11) **EP 0 518 276 B1**
(45) Veröffentlichungstag und Bekanntmachung des Hinweises auf die Patenterteilung: **09.11.1994**
(21) Anmeldenummer: 92109719.2
(22) Anmeldetag: 10.06.1992
(51) Int. Cl.: A01G 13/10

(54) **Schneckenfalle**
Slug trap
Piège pour limaces

(30) Priorität: 11.06.1991 CH 1738/91
(43) Veröffentlichungstag der Anmeldung: 16.12.1992
(73) Patentinhaber: LONZA AG, CH-3945 Gampel/Wallis (CH)
(72) Erfinder: Bieri, Markus, Dr., Rüschlikon (Kanton Zürich) (CH); Hurst, Johanna, Rheinfelden (Kant.Aargau) (CH)
(74) Vertreter: Weinhold, Peter, Dr.

(56) Entgegenhaltungen:
- DE-A- 3 504 112
- GB-A- 2 120 068
- CULTIVAR, 31. Mai 1991, STE GENEVIèVE Seiten 26 - 27 C .FAYOLLE 'La limace devant la caméra des chercheurs'
- AU-A-16495/76 (EASTERBROOK)

## Beschreibung

Die Erfindung betrifft eine neue Schneckenfalle welche bevorzugt im Feldbau zur Abschätzung der Schneckendichte verwendet wird.

Die bisher bekannten Schneckenfallen verfolgten hauptsächlich das Ziel, den Zeitpunkt des Schneckenauftretens abzuschätzen, um die Schnecken möglichst zuverlässig zu vernichten ohne jedoch die Schneckendichte und damit die Gefahr für die Kultur zu kennen.

Alle bekannten Fallentypen nutzen die Eigenheit der Schnecken, tagsüber einen licht- und windgeschützen feuchten Unterschlupf aufzusuchen.

Im Feldbau wurde den Landwirten daher empfohlen, z.B. Ziegel, Holzbrettstücke, nasse Säcke oder auch Wellkarton, der mit schwarzer Plastikfolie abgedeckt wurde, auszulegen und am/im Boden windgeschützt zu verankern. Die abgedeckte Stelle wurde zuvor zweckmässig mit einem handelsüblichen Schneckenvertilgungsmittel behandelt. (Die Grüne, Heft 16 v. 19.4.1991, Seite 10f).

Vorgeschlagen wurden auch Schneckenfallen, die aus einer Filzmatte bestehen, welche an der Oberfläche zum Zweck des Lichtschutzes mit einer aluminisierten Plastikfolie und an der bodenzugewandten Seite mit einer feinporigen Plastikfolie versehen sind. (C Fayolle, Cultivar No.297, 15-31.5.1991; Bayer Pflanzenschutzkurier 2/90)

Diese bekannten Fallen haben den grossen Nachteil, dass ihre Installation und die anschliessende Kontrolle auf Schneckendichte sehr aufwendig ist. Diese Fallen müssen durch die schlechte Verwitterungsstabilität ausserdem oft ersetzt werden.

Diese Nachteile der bekannten Fallentypen führten oft dazu, dass der Landwirt geneigt ist, ohne Abschätzung der Schneckendichte eine Schneckenbekämpfung vorzunehmen, was sowohl oekologisch als auch oekonomisch sinnlos ist. Für den Landwirt besteht bei der herkömmlichen Methode zudem das Risiko, dass die Schneckenbekämpfung zum falschen Zeitpunkt vorgenommen wird und die Massnahme somit wirkungslos ist.

Die Aufgabe bestand folglich darin, eine Schneckenfalle zu entwickeln, die die genannten Nachteile nicht aufweist.

Die Aufgabe konnte gelöst werden mit einer Schneckenfalle gemäss Anspruch 1.

Die erfindungsgemässe Falle nutzt dieselbe Eigenheit der Schnecke, tagsüber einen geschützten Unterschlupf zu suchen. Das geschlossenzellig geschäumte Kunststoffmaterial schirmt dabei in optimaler Weise Wärme- und Sonneneinstrahlung ab und ist absolut wasserundurchlässig. Der abgedeckte Boden unter der Falle kann somit nicht austrocknen. Die Kondenswasserbildung an der zweckmässig glatten Unterseite des geschlossenzellig geschäumten Kunststoffmaterials führt dazu, dass für die Schnecke eine ideale Umgebung vorliegt.

Die Schneckenfalle ist erfindungsgemäss mit einer geeigneten Befestigungs- oder Verankerungsvorrichtung versehen, um die Falle am Boden vor Windverwehung zu sichern. Die Verankerung erfolgt zweckmässig mit einem oder mehreren den plattenförmigen Formkörper durchdringenden Verankerungsstäben, wobei die Verankerungsstäbe auf ihrem bodenseitigen Ende zugespitzt sind.

Die Verankerung erfolgt bevorzugt mit einem Verankerungsstab, der den Formkörper zweckmässig in seiner geometrischen Mitte durchdringt und der auf seinem bodenseitigen Ende zugespitzt ist.

Der Verankerungsstab bzw. die Verankerungsstäbe sind über geeignete Halterungen z.B. über mit den Stäben verpresste Alumanschetten, mit dem Formkörper fest verbunden.

Um eine gute Sicherung zu gewährleisten, tritt die Spitze des Verankerungsstabs mindestens 2 cm aus der Unterseite des Formkörpers hervor.

Der auf der Oberseite des Formkörpers herausragende Teil des Verankerungsstabs ist mindestens so lang, dass er eine bequeme Handhabung der Schneckenfalle ermöglicht.

Es ist dabei durchaus möglich, zusätzliche Handhabungserleichterungen, wie Handgriffe oder Schlaufen oder auch Kennzeichnungsvorrichtungen, wie Wimpel oder Fahnen, vorzusehen.

Der Verankerungsstab kann aus einem festen Stab oder auch aus einem Rohr bestehen und grundsätzlich aus beliebigem Material wie z.B. aus Holz, Bambus, Metall (vorzugsweise Aluminium) oder aus einem Kunststoff hergestellt sein.

In einer weiteren Ausführungsform kann auf der Oberseite des Formkörpers ein Wassertank vorgesehen werden von welchem eine zweckmässig regelbare Zufuhrleitung durch den Formkörper auf die Unterseite des Formkörpers führt, um bei Bedarf die Unterseite der Schneckenfalle zu befeuchten.

Der plattenförmige Formkörper kann an und für sich eine beliebige Form aufweisen. Zweckmässig weist er aber eine quadratische oder runde Form, bevorzugt eine quadratische Form auf.

Die Kantenlänge bzw. der Durchmesser des plattenförmigen Formkörpers beträgt zweckmässig zwischen 4 cm und 100 cm, vorzugsweise zwischen 10 cm und 40 cm.

Die Dicke des Formkörpers sollte zwischen 0,4 cm und 10 cm, vorzugsweise zwischen 2 cm und 5 cm, betragen.

An und für sich eignen sich für den Formkörper alle handelsüblichen geschlossenzellig geschäumten Kunststoffmaterialien, wie z.B. geschlossenzellige PVC- oder PE-Schäume.

Als besonders geeignet hat sich ein geschlossenzelliger PVC-Weichschaum mit einer Dichte von 50 kg/m³ bis 100 kg/m³ erwiesen, insbesondere AIREX^{R} PVC-Weichschäume der genannten Dichte.

Vorzugsweise Ausgestaltung der Erfindung wurden durch die nachstehenden Figuren veranschaulicht.

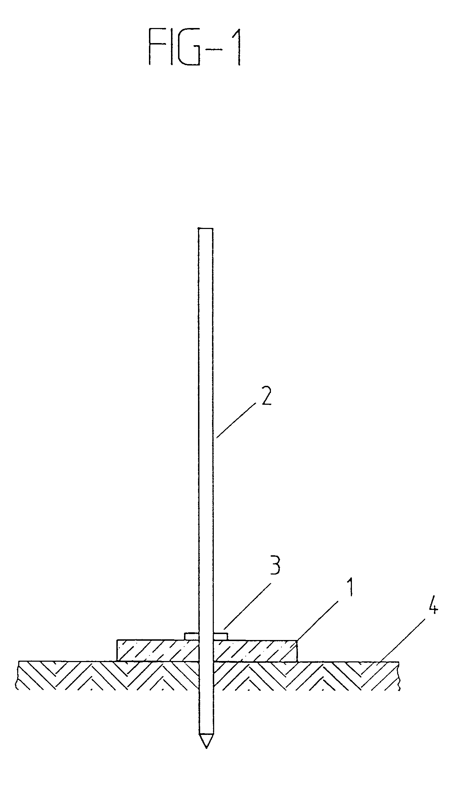

In Fig. 1 wird eine bevorzugte Schneckenfalle im Längsschnitt gezeigt, welche aus einem dem Formkörper 1 in seiner geometrischen Mitte durchdringenden Verankerungsstab 2 besteht, welche die Schneckenfalle im Boden 4 verankert. Der Verankerungsstab 2 ist dabei durch die Halterung 3 mit dem Formkörper 1 verbunden.

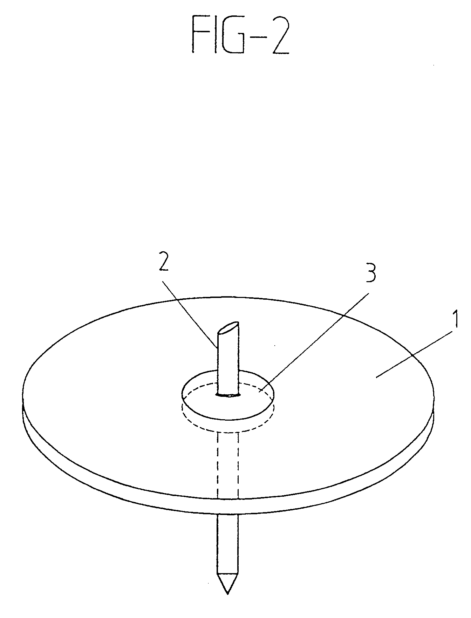

In Fig. 2 wird eine runde Ausführungsform des Formkörpers 1 gezeigt.

Fig. 3a zeigt eine Aufsicht einer Schneckenfalle mit einem runden Formkörper 1 der in seiner geometrischen Mitte mit einem Verankerungsstab 2 durchdrungen wird.

Fig. 3b zeigt eine Aufsicht einer Schneckenfalle mit einem runden Formkörper 1 der zusätzlich zum zentralen Verankerungsstab 2 drei weitere konzentrisch angeordnete Verankerungsstäbe 5 aufweist.

Fig. 3c zeigt entsprechend Fig. 3a eine Aufsicht einer Schneckenfalle mit einem quadratischen Formkörper 1.

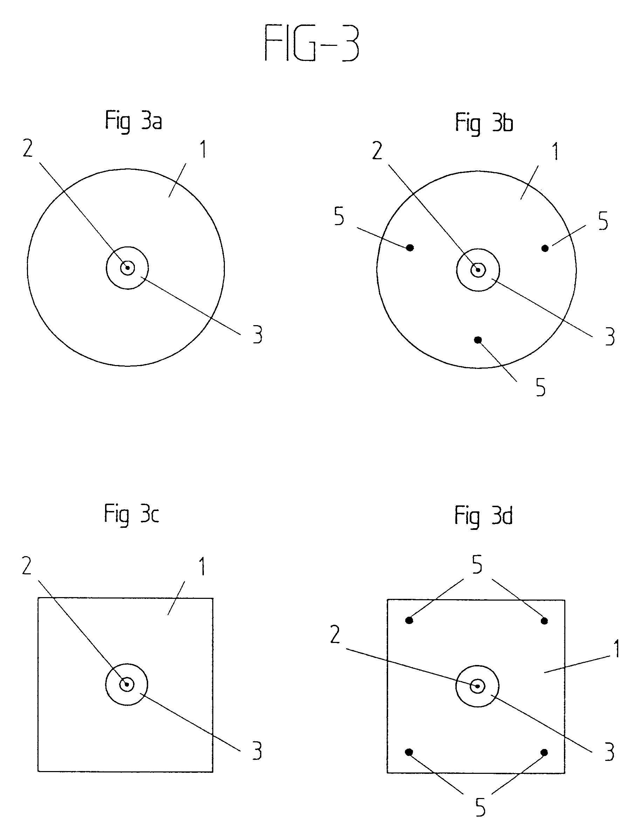

Fig. 3c zeigt ebenfalls eine Schenckenfalle mit einem quadratischen Formkörper 1, der zusätzlich zum zentralen Verankerungsstab 2 vier weitere in den Ecken angeordnete Verankerungsstäbe 5 aufweist.

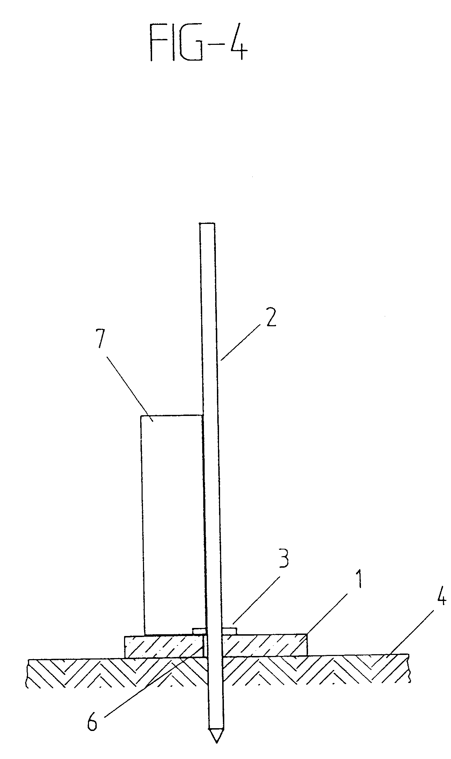

Fig. 4 zeigt eine Ausführungssform, welche auf der Oberseite des Formkörpers 1 einen Wassertank 7 aufweist, von welchem eine Zufuhrleitung 6 dem Verankerungsstab 2 entlang auf die Unterseite des Formkörpers führt, um bei Bedarf den Boden 4 zu benetzen.

Die erfindungsgemässe Schneckenfalle wird zweckmässig in grösseren Mengen und systematisch am Abend auf dem Feld ausgebracht und üblicherweise nach ca. 24 Stunden auf Schneckenbesatz kontrolliert.
Die im Vergleich zum Stand der Technik bessere Handhabung der Schneckenfalle erlaubt mit geringem Aufwand eine zuverlässige Schätzung der Schneckendichte und damit einen mengenmässigen gezielten und auf die Kultur abgestimmten Einsatz von Schneckenvertilgungsmittel.

## Patentansprüche

1. Schneckenfalle dadurch gekennzeichnet, dass sie aus einem plattenförmigen Formkörper (1), aus einem geschlossenzellig geschäumten Kunststoffmaterial und einer damit verbundenen Vorrichtung zum Befestigen oder Verankern des Formkörpers im oder am Boden, besteht.

2. Schneckenfalle nach Patentanspruch 1, dadurch gekennzeichnet, dass die Vorrichtung zum Befestigen oder Verankern des Formköpers im oder am Boden (4) aus einem oder mehreren, den plattenförmigen Formkörper (1) durchdringenden Verankerungsstäben (2) besteht, wobei die Verankerungsstäbe auf der dem Boden zugewandten Seite vorzugsweise zugespitzt sind.

3. Schneckenfalle nach Patentanspruch 2, dadurch gekennzeichnet, dass die Vorrichtung zum Befestigen oder Verankern des Formkörpers im oder am Boden (4) aus einem, dem plattenförmigen Formkörper (1) zweckmässig in seiner geometrischen Mitte durchdringenden Verankerungsstab (2) besteht, wobei der Verankerungsstab auf der dem Boden zugewandten Seite zugespitzt ist.

4. Schneckenfalle nach einem der Patentansprüche 1 bis 3, dadurch gekennzeichnet, dass der plattenförmige Formkörper (1) eine quadratische oder runde Form mit einer Kantenlänge bzw. einem Durchmesser von 4 cm bis 100 cm und eine Dicke von 0,4 cm bis 10 cm aufweist.

5. Schneckenfalle nach einem der Patentansprüche 1 bis 4, dadurch gekennzeichnet, dass das geschlossenzellig geschäumte Kunststoffmaterial ein PVC-Weichschaumstoff mit einer Dichte von 50 bis 100 kg/m³ ist.

6. Verwendung von einer oder mehrerer der Schneckenfallen nach den Ansprüche 1 bis 5, im Feldbau zur Abschätzung der Schneckendichte.

## Claims

1. Slug trap characterized by consisting of a plate-shaped molded body (1) of a closed-cell foamed synthetic material and, attached thereto, a device for fastening or anchoring said molded body in or on the ground.

2. The slug trap according to Claim 1 , characterized in that the device for fastening or anchoring the molded body in or on the ground (4) consists of one or more anchoring rods (2) extending through said plate-shaped molded body (1), said anchoring rods being preferably tapered at the end turned towards the ground.

3. The slug trap according to Claim 2, characterized in that the device for fastening or anchoring the molded body in or on the ground (4) consists of an anchoring rod (2) extending suitably through the geometric center of said plate-shaped molded body (1), said anchoring rod being tapered at the end turned towards the ground.

4. The slug trap according to any one of Claims 1 to 3, characterized in that the plate-shaped molded body (1) is of a square or round form having an edge length and diameter, respectively, of from 4 cm to 100 cm and a thickness of from 0.4 cm to 10 cm.

5. The slug trap according to any one of Claims 1 to 4, characterized in that the closed-cell foamed synthetic material is a PVC soft-foam having a density of from 50 to 100 kg/m³.

6. Use of one or more of the slug traps according to Claims 1 to 5 for rating the density of slug population in cultivated fields.

## Revendications

1. Piège pour limaces, caractérisé en ce qu'il est constitué par un corps moulé (1) en forme de plaque, en un matériau synthétique à alvéoles fermées et en un dispositif relié à celui-ci pour la fixation ou l'ancrage du corps moulé dans ou sur le sol.

2. Piège à limaces selon la revendication 1, caractérisé en ce que le dispositif destiné à la fixation et à l'ancrage du corps moulé dans ou sur le sol (4) est constitué d'une ou de plusieurs barres d'ancrage (2) traversant le corps moulé (1) en forme de plaque, les barres d'ancrage étant de préférence effilées sur le côté dirigé vers le sol.

3. Piège à limaces selon la revendication 2, caractérisé en ce que le dispositif destiné à la fixation et à l'ancrage du corps moulé dans ou sur le sol (4) consiste en une ou plusieurs barres d'ancrage (2) traversant judicieusement le corps moulé en forme de plaque (1) en son milieu géométrique, la barre d'ancrage étant effilée sur le côté dirigé vers le sol.

4. Piège à limaces selon l'une des revendications 1 à 3, caractérisé en ce que le corps moulé en forme de plaque (1) présente une forme carrée ou arrondie avec une longueur de bords ou un diamètre de 4 cm à 100 cm et une épaisseur de 0,4 cm jusqu'à 10 cm.

5. Piège à limaces selon l'une des revendications 1 à 4, caractérisé en ce que la matière synthétique à alvéoles fermées est une mousse souple PVC d'une densité de 50 à 100 kg/m³.

6. Utilisation d'un ou plusieurs des pièges à limaces selon les revendications 1 à 5 dans l'agriculture pour la détermination de la densité des limaces.
